# EUROPÄISCHE PATENTSCHRIFT

(11) **EP 1 901 414 B1**
(45) Veröffentlichungstag und Bekanntmachung des Hinweises auf die Patenterteilung: **08.07.2009**
(21) Anmeldenummer: 06019407.3
(22) Anmeldetag: 15.09.2006
(51) Int. Cl.: H02J 7/35, H05B 37/00

(54) **Steuerung für eine durch Sonnenenergie versorgte Beleuchtung**
Control for a lamp powered by solar energy
Commande pour une illumination alimentée par énergie solaire

(43) Veröffentlichungstag der Anmeldung: 19.03.2008
(73) Patentinhaber: ERGOBIONIK GmbH, 46240 Bottrop (DE)
(72) Erfinder: Klingbeil, Thomas, 46240 Bottrop (DE)
(74) Vertreter: DR. STARK & PARTNER

(56) Entgegenhaltungen:
- EP-A2- 0 693 818
- JP-A- 6 266 457
- JP-A- 2002 354 677
- US-A1- 2004 207 366
- US-A1- 2006 146 534

## Beschreibung

Die Erfindung betrifft eine Steuerung für eine solargetriebene Beleuchtung, die einerseits mit wenigstens einer Solarzelle, insbesondere einer Solarbatterie, und mit einem Akkumulator sowie andererseits mit einer elektrisch betriebenen Lichtquelle elektrisch leitend verbunden ist, wobei die Steuerung eine Ladeschaltungsanordnung für die Steuerung der Ladung des Akkumulators aufweist und weiterhin mit einer Leuchtschaltungsanordnung zur Steuerung der Aktivierung der Lichtquelle versehen ist.

Unter Steuerung wird vorliegend eine elektronische Schaltung verstanden, die zur Ansteuerung dient. Diese Schaltung kann über geeignete sensorische Rückkopplungen auch Regelfunktionen ausführen.

Aus der Praxis sind verschiedene solargetriebene Beleuchtungen bekannt, bei denen die Lichtquelle üblicherweise durch eine Leuchtdiode gebildet ist. Die Solarbatterie ist dabei aus Kostengründen häufig direkt über eine Diode an einen Akkumulator angeschlossen und das als Leuchtdiode ausgebildete Leuchtmittel über einen Widerstand mit dem Akkumulator verbunden. Mit einem Schmitt-Trigger oder einem Komparator wird an der Solarbatterie detektiert, ob Dunkelheit eingetreten ist, so dass dann die Lichtquelle aktiviert wird bis entweder der Akkumulator erschöpft ist oder aber wieder Helligkeit eintritt.

Nachteilig hierbei ist, dass Solarbatterien ihre maximale Ausgangsleistung in einem bestimmten Punkt der Strom-/Spannungskennlinie liefern, der als Maximum Power Point (MPP) bezeichnet wird. Die genaue Lage dieses Punktes hängt dabei nicht nur von den spezifischen Charakteristika der Solarbatterie ab, sondern wird auch durch die Sonneneinstrahlung mit bestimmt. Zudem ändert sich die Belastungssituation durch den Akkumulator während des Ladevorgangs, so dass regelmäßig die zur Verfügung stehende Leistung der Solarbatterie zumindest nicht während des gesamten Ladevorgangs optimal genutzt wird.

Bei aktivierter Lichtquelle besteht weiterhin das Problem, dass die Ausgangsspannung des Akkumulators während des Entladens sinkt, so dass die Leuchtkraft einer ungeregelt angeschlossenen Lichtquelle entsprechend dem Ladezustand des Akkumulators schwankt. Bei Verwendung einer stromgesteuerten Lichtquelle, wie z.B. einer Leuchtdiode, wird zudem ein großer Teil der zur Verfügung stehenden Energie des Akkumulators in einem Vorwiderstand in Wärme umgesetzt.

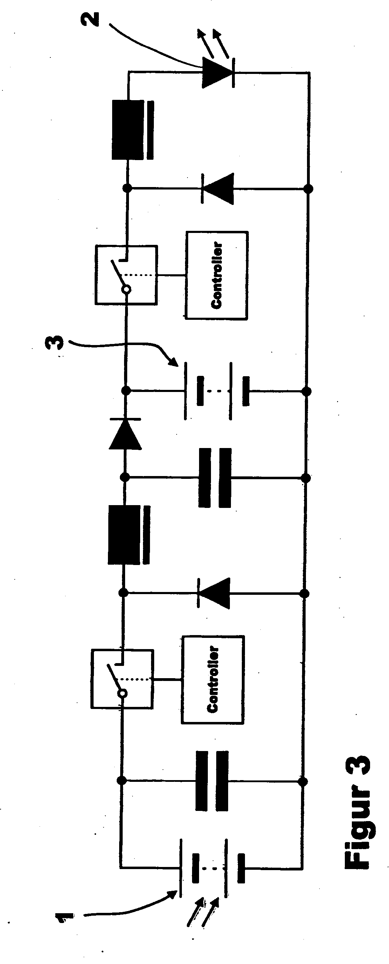

In Fig. 3 ist eine Standardlösung für eine Schaltung dargestellt, welche die oben beschriebenen Nachteile aufhebt. Dabei ist jeweils ein Schaltregler zum Laden des Akkumulators einerseits und zur Ansteuerung der Leuchtdiode andererseits vorgesehen, was jedoch einen hohen Aufwand darstellt.

Die US 2006/146534 A1 zeigt beispielhaft eine solar betrieben Leuchte, und aus der US 2004/207366 A1 ist ein Energieumwandlungssytem für erneuerbare Energie mit verschiedenen Betriebsmodi.

Aufgabe der Erfindung ist es, diesen Aufwand signifikant zu verringern und eine verbesserte Steuerung für eine solargetriebene Beleuchtung anzugeben.

Diese Aufgabe wird dadurch gelöst, dass zum einen die Ladeschaltungsanordnung für die Steuerung der Ladung des Akkumulators einen adaptiv geregelten Impedanzwandler aufweist und zum anderen die Leuchtschaltungsanordnung zur Steuerung der Aktivierung der Lichtquelle derart ausgebildet ist, dass sie die Spannung über bzw. den Strom durch die Lichtquelle im Wesentlichen konstant hält, wobei Ladeschaltungsanordnung und Leuchtschaltungsanordnung in eine gemeinsame, als Schaltregler ausgebildete Gesamtschaltungsanordnung integriert sind und Bauteile, die sowohl für Ladeschaltungsanordnung als auch für Leuchtschaltungsanordnung wesentlich sind und in beiden Schaltungsanordnungen identisch vorhanden sind, wie z. B. Controller, Spulen oder Leistungstransistor, in der Gesamtschaltungsanordnung nur einfach vorhanden sind und über eine entsprechende Verschaltung durch Schaltelemente abwechselnd der Ladeschaltungsanordnung bzw. der Leuchtschaltungsanordnung zur Verfügung stehen. Hierdurch werden Redundanzen bei Kosten bestimmenden Teilen vermieden und insoweit eine kostengünstige Möglichkeit für eine verbesserte Steuerung angegeben. Vorteilhafterweise können für das Schaltnetzteil und/oder den Impedanzwandler jeweils ein so genannter Step-down-Konverter vorgesehen sein.

Dabei sind insoweit durch die Schaltelemente zum einen während der Ladephase der Eingang des Schaltreglers mit der Solarbatterie und der Ausgang des Schaltreglers mit dem Akkumulator verbunden und zum anderen sind während der Entladephase, in der die Lichtquelle aktiviert ist, der Eingang des Schaltreglers mit dem Akkumulator und der Ausgang des Schaltreglers mit der Lichtquelle verbunden.

Vorzugsweise können die Schaltelemente als Dioden und/oder gesteuerte Halbleiterelemente, wie beispielsweise Transistoren oder dergleichen, ausgebildet sein, so dass beispielsweise auch eine selbsttätige Schaltfunktion aufgrund der herrschenden Spannungsverhältnisse an Solarbatterie und Akkumulator gegeben sein kann, beispielsweise wenn ein Schalter durch zwei Dioden realisiert ist. Ein durch einen Transistor und eine Diode realisierter Schalter kann beispielsweise auch eine aktive Steuerung erfordern.

Vorteilhafterweise kann die Solarbatterie durch den Impedanzwandler derart belastbar sein, dass sie hinsichtlich ihrer Strom-/Spannungskennlinie immer in dem Punkt ihrer maximalen Ausgangsleistung betrieben wird, so dass durch den Regelalgorithmus des Impedanzwandlers die Solarbatterie in ihrem Maximum Power Point betrieben wird und somit die maximal mögliche Ausgangsleistung liefert.

Im Folgenden wird ein in der Zeichnung dargestelltes Ausführungsbeispiel der Erfindung erläutert. Es zeigen:
- Fig. 1: eine vereinfacht dargestelltes Schaltbild einer Steuerung für eine solargetriebene Beleuchtung während der Ladephase und
- Fig. 2: den Gegenstand nach Fig. 1 während der Entladephase, und
- Fig. 3: eine vorbekannte Schaltungsanordnung.

In allen Figuren werden für gleiche bzw. gleichartige Bauteile übereinstimmende Bezugszeichen verwendet.

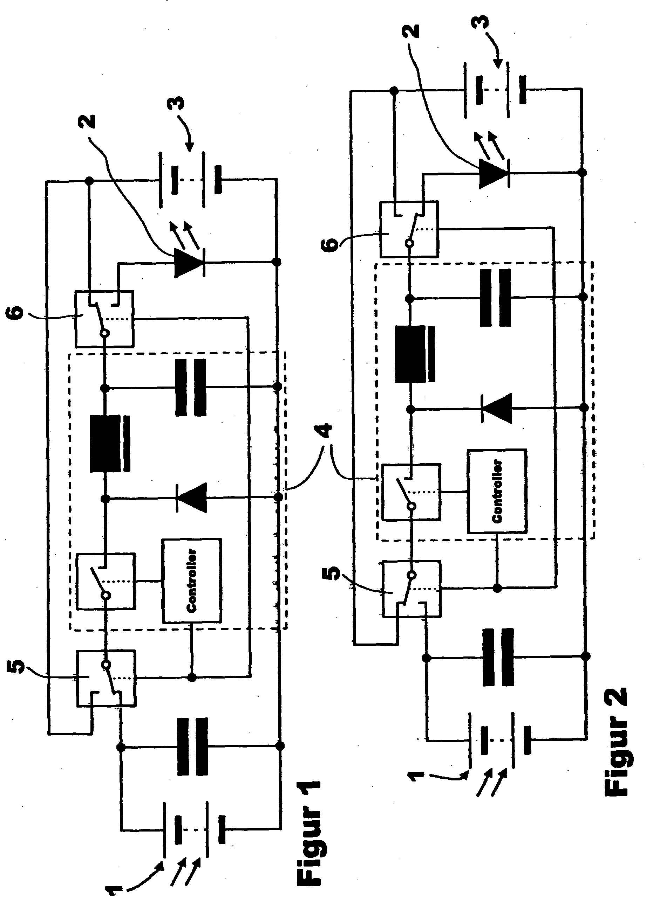

Fig. 1 zeigt eine erfindungsgemäße Steuerung mit einer Solarbatterie 1, einer als LED 2 ausgebildeten Lichtquelle und einem Akkumulator 3.

Für die Steuerung sowohl der LED 2 als auch des Akkumulators 3 ist ein einziger Schaltregler 4 vorgesehen, der durch gesteuerte Umschalter 5, 6 während der Ladephase den Eingang des Schaltreglers 4 mit der Solarbatterie 1 und den Ausgang des Schaltreglers 4 mit dem Akkumulators 3 verbindet, wohingegen während der Entladephase der Eingang des Schaltreglers 4 mit dem Akkumulators 3 und der Ausgang des Schaltreglers 4 mit der LED 2 verbunden ist.

Dabei können die Umschalter durch aktiv gesteuerte Halbleiterbauelemente, wie z. B. Transistoren, oder durch Dioden realisiert sein, wobei die Dioden nicht aktiv durch den Schaltregler 4, sondern durch die herrschenden Spannungsverhältnisse an Solarbatterie 1 und Akkumulator 3 selbstständig schaltend ausgebildet sind.

## Patentansprüche

1. Steuerung für eine solargetriebene Beleuchtung, die einerseits mit wenigstens einer Solarzelle, insbesondere einer Solarbatterie (1), und mit einem Akkumulator (3) sowie andererseits mit einer elektrisch betriebenen Lichtquelle elektrisch leitend verbunden ist, wobei die Steuerung eine Ladeschaltungsanordnung für die Steuerung der Ladung des Akkumulators (3) aufweist und weiterhin mit einer Leuchtschaltungsanordnung zur Steuerung der Aktivierung der Lichtquelle versehen ist, **dadurch gekennzeichnet, dass** zum einen die Ladeschaltungsanordnung für die Steuerung der Ladung des Akkumulators (3) einen adaptiv geregelten Impedanzwandler aufweist und zum anderen die Leuchtschaltungsanordnung zur Steuerung der Aktivierung der Lichtquelle derart ausgebildet ist, dass sie die Spannung über bzw. den Strom durch die Lichtquelle im Wesentlichen konstant hält, wobei Ladeschaltungsanordnung und Leuchtschaltungsanordnung in eine gemeinsame, als Schaltregler (4) ausgebildete Gesamtschaltungsanordnung integriert sind und Bauteile, die sowohl für Ladeschaltungsanordnung als auch für Leuchtschaltungsanordnung wesentlich sind und in beiden Schaltungsanordnungen identisch vorhanden sind, wie z. B. Controller, Spulen oder Leistungstransistor, in der Gesamtschaltungsanordnung nur einfach vorhanden sind und über eine entsprechende Verschaltung durch Schaltelemente abwechselnd der Ladeschaltungsanordnung bzw. der Leuchtschaltungsanordnung zur Verfügung stehen, wobei durch die Schaltelemente zum einen während der Ladephase der Eingang des Schaltreglers mit der Solarbatterie und der Ausgang des Schaltreglers mit dem Akkumulator (3) verbunden ist und zum anderen während der Entladephase, in der die Lichtquelle aktiviert ist, der Eingang des Schaltreglers mit dem Akkumulator (3) und der Ausgang des Schaltreglers mit der Lichtquelle verbunden ist

2. Steuerung nach dem vorhergehenden Anspruch, **dadurch gekennzeichnet, dass** die Schaltelemente als Dioden und/oder gesteuerte Halbleiterelemente, wie beispielsweise Transistoren oder dergleichen, ausgebildet sind.

3. Steuerung nach einem der vorhergehenden Ansprüche, **dadurch gekennzeichnet, dass** die Solarbatterie durch den der Impedanzwandler derart belastbar ist, dass sie hinsichtlich ihrer Strom-/Spannungskennlinie immer in dem Punkt ihrer maximalen Ausgangsleistung betrieben wird.

## Claims

1. Control for a solar-powered light, which firstly is connected electroconductively to at least one solar cell, in particular a solar battery (1) and with a battery (3) and secondly is connected to an electrically operated light source, while the control has a charging circuit to control the charging of the battery (3) and is also provided with a light switching configuration to control the activation of the light source, **characterised in that** firstly the charging circuit for controlling the charging of the battery (3) has an adaptive controlled impedance converter and secondly the light switching configuration for controlling the activation of the light source is designed in such a way that it keeps the voltage across and the current through the light source essentially constant, while charging circuit and light switching configuration are integrated in a common overall circuit configuration designed as a switching controller (4) and components which are essential for both charging circuit and for light switching configuration and are present in both circuit assemblies identically, such as e.g. controller, coils or power transistor, are only present once in the overall circuit configuration and are available via corresponding circuitry alternately to the charging circuit or to the light switching configuration through switch elements, ***while*** the switching elements, firstly during the charging phase, connect the input of the switching controller with the solar battery and the output of the switching controller with the battery (3) and secondly during the discharge phase, in which the light source is activated, the switching elements connect the input of the switching controller to the battery (3) and the output of the switching controller to the light source.

2. Control according to the preceding claim, **characterised in that** the switching elements are designed as diodes and/or controlled semiconductor elements, such as for example transistors or similar.

3. Control according to one of the preceding claims, **characterised in that** the solar battery can be loaded by the impedance converter in such a way that, with respect to its current/voltage curve, it is always operated at the point of its maximum output power.

## Revendications

1. Commande pour un éclairage alimenté par énergie solaire, qui est reliée de manière électroconductrice d'une part à au moins une cellule solaire, en particulier une batterie solaire (1), et à un accumulateur (3) ainsi que, d'autre part, à une source de lumière fonctionnant à l'énergie électrique, la commande présentant un circuit de charge servant à commander la charge de l'accumulateur (3) et étant pourvue en outre d'un circuit d'éclairage servant à commander l'activation de la source de lumière, **caractérisée en ce que,** d'une part, le circuit de charge présente pour la commande de la charge de l'accumulateur (3) un convertisseur d'impédance à régulation adaptative et, d'autre part, le circuit d'éclairage servant à commander l'activation de la source de lumière est conçu de manière à maintenir essentiellement constant(e) la tension à ou le courant à travers la source de lumière, circuit de charge et circuit d'éclairage étant intégrés dans un circuit global commun conçu comme régulateur à découpage (4) et des composants qui sont essentiels aussi bien pour le circuit de charge que pour le circuit d'éclairage et sont présents identiquement dans les deux circuits, comme par exemple des contrôleurs, des bobines ou des transistors de puissance, n'étant présents qu'une seule fois dans le circuit global et étant mis à la disposition, par l'intermédiaire d'un câblage correspondant, alternativement du circuit de charge et du circuit d'éclairage par des éléments de commutation, lesquels éléments de commutation relient d'une part, pendant la phase de charge, l'entrée du régulateur à découpage à la batterie solaire et la sortie du régulateur à découpage à l'accumulateur (3) et d'autre part, pendant la phase de décharge, dans laquelle la source de lumière est activée, l'entrée du régulateur à découpage à l'accumulateur (3) et la sortie du régulateur à découpage à la source de lumière.

2. Commande selon la revendication précédente, **caractérisée en ce que** les éléments de commutation sont réalisés sous la forme de diodes et/ou d'éléments semiconducteurs commandés, comme par exemple des transistors ou analogues.

3. Commande selon l'une des revendications précédentes, **caractérisée en ce que** la batterie solaire peut être chargée par le convertisseur d'impédance de manière à être toujours exploitée au point de sa puissance de sortie maximale en ce qui concerne sa courbe caractéristique courant/tension.
